# EUROPEAN PATENT APPLICATION

(11) **EP 1 587 081 A2**
(43) Date of publication of application: **19.10.2005**
(21) Application number: 05300213.5
(22) Date of filing: 23.03.2005
(51) Int. Cl.: G11B 7/085

(54) **Method for track jump control**

(30) Priority: 14.04.2004 EP 04008848
(71) Applicant: Thomson Licensing, 92100 Boulogne Billancourt (FR)
(72) Inventor: Basler, Stefan, 78086 Brigachtal (DE); Peter, Dietmar, 78669 Wellendingen (DE)
(74) Representative: Thies, Stephan

(57) **Abstract**

The present invention relates to a method for controlling a track jump on an optical recording medium (1), and to an apparatus for reading from and/or writing to optical recording media (1) using such method.

According to the invention a method for track jump control includes the steps of:
- defining a first tolerance window (7) adjacent to a target position (3) on the optical recording medium (1),
- defining a second tolerance window (6) adjacent to the first tolerance window (7),
- after finishing (11) a track jump, reading (12) a sector or subcode on the optical recording medium (1),
- if the sector or subcode read (12) after finishing (11) the track jump lies (13) within the second tolerance window (6), determining that the track jump was finished (11) within the second tolerance window (6),
- if the track jump was finished (11) within the second tolerance window (6), letting the system settle (14) for the remainder of the second tolerance window (6) plus the first tolerance window (7), and
- resuming (15) the playback or recording operation at the target position (3).

## Description

The present invention relates to a method for controlling a track jump on an optical recording medium, and to an apparatus for reading from and/or writing to optical recording media using such method.

On optical recording media data are stored along spiral tracks. In order to enable random access to specific data, so called sector or subcode information is embedded in the data stream. Each sector or subcode has an ID, which is a number that increments along the data stream. During playback and/or recording of optical recording media it is often necessary to jump from one location on the recording medium to another location on the recording medium. Those jumps to a desired target sector or subcode are referred to as track jumps. In order to perform a track jump to the requested target sector or subcode of an optical recording medium the number of tracks to jump is first calculated based on the difference between the currently played back sector or subcode and the requested sector or subcode. When a track jump is completed servo-wise, a playback control mechanism compares the first successfully read sector or subcode ID with the desired target sector or subcode. The playback control mechanism only switches from jump mode to playback mode if the first successfully read sector or subcode is the target sector or subcode or one within a small tolerance range before that target sector or subcode. In other words, for the target of the track jump a tolerance window is defined from sector or subcode number *n-m* to sector or subcode number *n*, where *n* is the target sector or subcode and *m* is a number of subcodes or sectors usually in the order of one track, i.e. one revolution of the optical recording medium. A problem with this approach, especially in low cost systems and/or with critical optical recording media, is that once the track jump is finished servo-wise, it takes a little time for the optical mechanism to settle. This may be perceived as incorrect data once playback indicates that the requested target is reached though the system is not settled, or it may require a number of additional iteration track jumps.

It is, therefore, an object of the invention to propose an improved method for track jump control, which overcomes the above mentioned drawbacks.

According to the invention, this object is achieved by a method for track jump control for an optical recording medium including the steps of:
- defining a first tolerance window adjacent to a target position on the optical recording medium,
- defining a second tolerance window adjacent to the first tolerance window,
- after finishing a track jump, reading a sector or subcode on the optical recording medium,
- if the sector or subcode read after finishing the track jump lies within the second tolerance window, determining that the track jump was finished within the second tolerance window,
- if the track jump was finished within the second tolerance window, letting the system settle for the remainder of the second tolerance window plus the first tolerance window,
- if the sector or subcode read after finishing the track jump lies within the first tolerance window, calculating an actual landing sector or subcode to check if the track jump was actually finished within the second tolerance window,
- if the track jump was actually finished within the second tolerance window, letting the system settle for the remainder of the first tolerance window,
- initiating an additional track jump in case neither the sector or subcode read after finishing the track jump nor the actual landing sector or subcode lie within the second tolerance window, and
- resuming the playback or recording operation at the target position.
The method ensures that after finishing the track jump there is sufficient time to allow the system to settle so that the system is settled when the target position is reached and the playback or recording operation is resumed. In case the track jump was actually finished within the second tolerance window though the read sector or subcode lies within the first tolerance window the system already had some time to settle before the sector or subcode was read after finishing the track jump. Therefore, the system will be settled when the target position is reached and the playback or recording operation is resumed. In the case the actual landing sector or subcode lies within the first tolerance window, the system will not be settled when the target position is reached and the playback or recording operation is resumed. Then an additional track jump is necessary to reach the desired target position.

Advantageously after finishing the track jump the time when the track jump was finished is noted, and the actual landing sector or subcode is calculated based on the sector or subcode read after finishing the track jump and the time passed since the track jump was finished until the sector or subcode was read.
Based on the time that has passed since the track jump was finished until the sector or subcode was read the actual landing sector or subcode can easily be calculated when the rotation speed of the optical recording medium is known, which is generally the case since the rotation speed has to be controlled anyway for playback or recording. Of course, it is also possible to assume a fixed delay between the finishing of the track jump and the reading of the sector or subcode, and to use this delay for calculating the actual landing sector or subcode.

Advantageously an additional track jump is initiated in case the sector or subcode read after finishing the track jump neither lies within the second tolerance window nor within the first tolerance window. For example, the read sector or subcode may lie before the second tolerance window. In this case an additional track jump is performed since it would require too much time to just wait until the target position is reached. Alternatively, the read sector or subcode may lie after the first tolerance window. In this case the target position has already been missed and an additional track jump is necessary to reach the desired target position.

Preferably, different first and/or second tolerance windows are defined for different types of optical recording media, for different playback or recording speeds, and/or for different operating conditions. For example, a rewritable recording medium might need larger tolerance windows than a recordable or recorded recording medium. Similarly, a low-density recording medium such as a Compact Disc might need smaller tolerance windows than a high-density recording medium such as a Digital Versatile Disk. Also different tolerance windows might be suitable for different operating conditions such as playback and recording.

According to a further refinement of the invention, including the quality of the optical recording medium is determined and the first and/or the second tolerance window is defined in accordance with the determined quality. This allows to adapt the tolerance windows to the specific recording medium and helps to avoid exceedingly large tolerance windows in case of recording media having a good quality. The quality is advantageously determined before the playback or recording operation is initiated, e.g. when the recording medium is inserted in a playback or recording apparatus. However, the quality can also be determined on the fly, i.e. during the playback or recording operation.

Preferably a track jump controller includes means for performing a method according to the invention for track jump control. Such a track jump controller is especially advantageous for low cost systems or for critical optical recording media.

Advantageously, an apparatus for reading from and/or writing to optical recording media performs a method or includes a track jump controller according to the invention for track jump control. Such an apparatus has an increased track jump performance.

For a better understanding of the invention, exemplary embodiments are specified in the following description with reference to the figures. It is understood that the invention is not limited to these exemplary embodiments and that specified features can also expediently be combined and/or modified without departing from the scope of the present invention. In the figures:
- Fig. 1: shows a spiral track on an optical recording medium with a servo jump window and a system settle window;
- Fig. 2: depicts the servo jump window and a system settle window in more detail; and
- Fig. 3: illustrates a flow chart of the method for track jump control according to the invention.

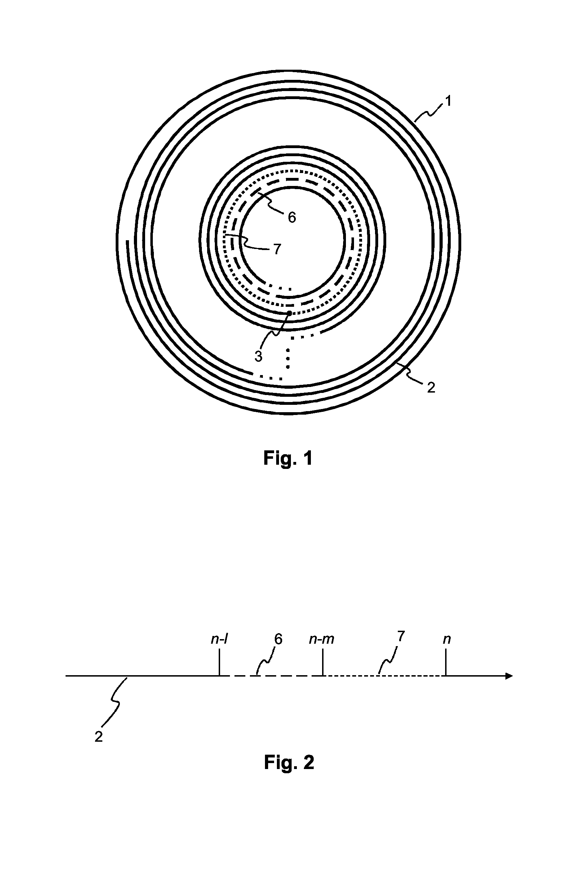

Fig. 1 shows an optical recording medium 1 with a spiral data track 2. For a track jump to a target sector or subcode *n* two tolerance windows are defined on a sector or subcode basis related to the target sector or subcode: a servo jump window 6 and a system settle window 7. The tolerance windows are depicted in more detail in Fig. 2. For simplicity in Fig. 2 the track is drawn as a linear track. The system settle window 7 is in a range *n-m* to n subcodes or sectors, while the servo jump window 6 is in the range *n*-*l* to *n-*(*m+1*) subcodes or sectors. Here *n* is the target sector or subcode, *m* and *l* are positive numbers with *l* being larger than *m* and *m* being larger than 0. Instead of a spiral data track, the data track may also be arranged in concentric circles. In this case, however, the servo jump window 6 and the system settle window 7 in combination may not exceed one rotation of the optical recording medium 1.

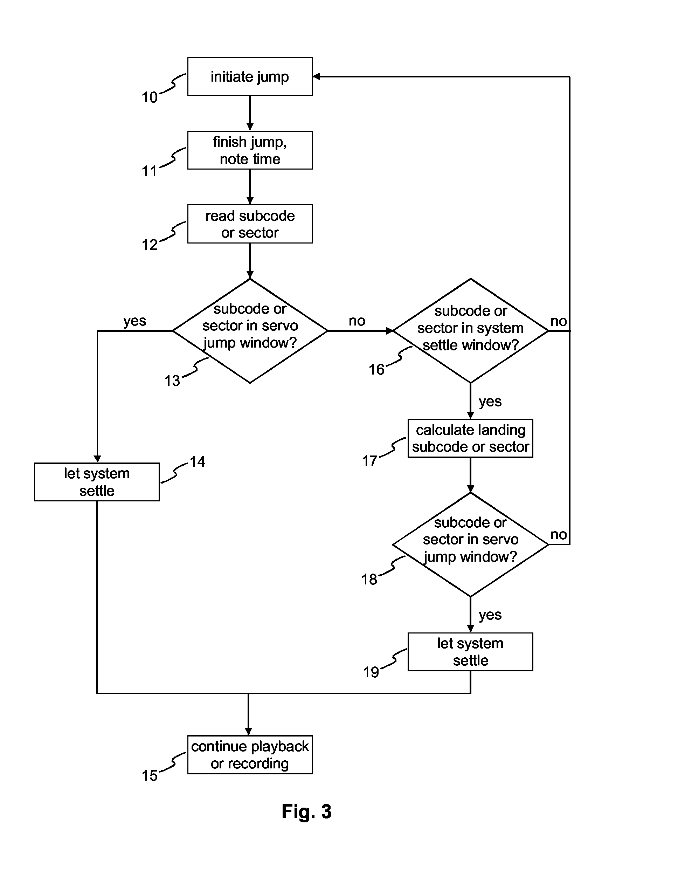

A flow chart of the method for track jump control according to the invention is illustrated in Fig. 3. When a track jump is initiated 10 and finished 11 the time when the track jump is finished is noted 11. When a first sector or subcode is successfully read 12 it is checked 13 if the read sector or subcode is within the servo jump window 6. If this is the case, the system is allowed to settle 14 for the remainder of the servo jump window 6 plus the entire system settle window 7 before the playback or recording operation is resumed 15 once the target sector or subcode is reached. If, however, the first successfully read sector or subcode is not within the servo jump window 6, it is checked 16 if it is within the system settle window 7. If this is not the case, a further track jump needs to be initiated 10. If the read sector or subcode is within the system settle window 7, the sector or subcode where the jump was ended is calculated 17 based on the first successfully read sector or subcode and the time that has expired since the servo jump was ended 11. It is then checked 18 if the calculated sector or subcode is within the servo jump window 6. If this is true, the track jump operation is considered successful in the sense that the track jump actually ended within the servo jump window 6 and the system is allowed to settle 19 for the remainder of the system settle window 7 before the playback or recording operation is resumed 15 once the target sector or subcode is reached. Otherwise a further track jump is initiated 10.

## Claims

1. Method for track jump control for an optical recording medium (1) including the steps of:
- defining a first tolerance window (7) adjacent to a target position (3) on the optical recording medium (1),
- defining a second tolerance window (6) adjacent to the first tolerance window (7),
- after finishing (11) a track jump, reading (12) a sector or subcode on the optical recording medium (1),
- if the sector or subcode read (12) after finishing (11) the track jump lies (13) within the second tolerance window (6), determining that the track jump was finished (11) within the second tolerance window (6),
- if the track jump was finished (11) within the second tolerance window (6), letting the system settle (14) for the remainder of the second tolerance window (6) plus the first tolerance window (7), and
- resuming (15) the playback or recording operation at the target position (3),
**characterized in that** it further includes the steps of:
- if the sector or subcode read (12) after finishing (11) the track jump lies (16) within the first tolerance window (7), calculating (17) an actual landing sector or subcode to check (18) if the track jump was actually finished (11) within the second tolerance window (6),
- if the track jump was actually finished (11) within the second tolerance window (6), letting the system settle (19) for the remainder of the first tolerance window (7), and
- initiating an additional track jump in case neither the sector or subcode read (12) after finishing (11) the track jump nor the actual landing sector or subcode lie within the second tolerance window (6).

2. Method according to claim 1, **wherein** after finishing the track jump the time when the track jump was finished is noted (11), and the actual landing sector or subcode is calculated based on the sector or subcode read (12) after finishing (11) the track jump and the time passed since the track jump was finished (11) until the sector or subcode was read.

3. Method according to claim 1 or 2, **further** including the step of initiating an additional track jump in case the sector or subcode read (12) after finishing (11) the track jump neither lies within the second tolerance window (6) nor within the first tolerance window (7).

4. Method according to one of claims 1 to 3, **wherein** different first and/or second tolerance windows (6, 7) are defined for different types of optical recording media (1), for different playback or recording speeds, and/or for different operating conditions.

5. Method according to one of claims 1 to 4, **further** including the steps of determining the quality of the optical recording medium (1) and defining the first and/or the second tolerance window (6, 7) in accordance with the determined quality.

6. Track jump controller, **characterized in that** it includes means for performing a method according to one of claims 1 to 5 for track jump control.

7. Apparatus for reading from and/or writing to optical recording media (1), **characterized in that** it includes means for performing a method according to one of claims 1 to 5 or includes a track jump controller according to claim 6 for track jump control.
